Europäisches Patentamt

European Patent Office

Office européen des brevets

(19)

(11) Numéro de publication: **0 314 563**
**A1**

## DEMANDE DE BREVET EUROPEEN

(12)

(21) Numéro de dépôt: 88402686.5

(22) Date de dépôt: 25.10.88

(51) Int. Cl.⁴: **A 01 K 41/00**
A 01 K 41/06

(30) Priorité: 27.10.87 FR 8714847

(43) Date de publication de la demande:
03.05.89 Bulletin 89/18

(84) Etats contractants désignés:
AT BE CH DE ES GB GR IT LI LU NL SE

(71) Demandeur: ELEVAGE AVICOLE DE LA BOHARDIERE
S.A.R.L.
Saint-Laurent-de-la-Plaine
F-49290 Chalonnes-sur-Loire (FR)

(72) Inventeur: Dambre, Pierre Elevage Avicole de la
Bohardière S.A.R.L. Saint-Laurent-de-la-Plaine
F-49290 Chalonnes-sur-Loire (FR)

(74) Mandataire: Ahner, Francis et al
CABINET REGIMBEAU 26, avenue Kléber
F-75116 Paris (FR)

(54) Chariot d'incubation d'oeufs pour une enceinte d'incubation ventilée.

(57) L'invention concerne un chariot d'incubation d'oeufs pour une enceinte d'incubation ventilée, chariot (10) dans lequel les oeufs (12) sont placés dans des berceaux (11) superposés en colonnes (13), ce chariot comprenant une pluralité de colonnes juxtaposées et les berceaux d'une meme colonne étant basculables alternativement dans un sens et dans l'autre en restant parallèles entre eux.

Selon l'invention, les berceaux de deux colonnes adjacentes sont articulés sur un montant vertical commun (21), les différents montants étant reliés à chacune de leurs extrémités à une série de traverses inclinables (29) reliées en série les une aux autres de manière à former un ensemble articulé à chaque point de liaison des traverses aux montants et à chaque point de liaison des montants aux berceaux, les montants adjacents pouvant être alternativement déplacés dans des sens opposés en restant parallèles à eux-mêmes de manière à réaliser un repliement et un déploiement de l'ensemble articulé produisant une inclinaison des berceaux, en sens inverse pour chacune de deux colonnes adjacentes.

De la sorte, le basculement alternatif des berceaux est réalisé sans fractionnement des colonnes et création concomitante, entre colonnes adjacentes, d'un couloir vide nuisible à une ventilation correcte de la masse des oeufs.

2 / 2

FIG. 2

**Description**

## CHARIOT D'INCUBATION D'OEUFS POUR UNE ENCEINTE D'INCUBATION VENTILEE.

La présente invention concerne un chariot d'incubation d'oeufs pour une enceinte d'incubation ventilée.

Dans ces chariots, les oeufs sont généralement placés dans des berceaux superposés en colonnes, le chariot comprenant une pluralité de colonnes juxtaposées, le plus souvent montées de manière à former un ensemble roulant.

Pour permettre une incubation correcte, les berceaux des différentes colonnes sont basculables alternativement dans un sens et dans l'autre.

L'inclinaison des berceaux pendant l'incubation est de l'ordre de 40 à 50 degrés, avec une périodicité de modification d'inclinaison de l'ordre de 1 à 3 heures.

Les chariots d'incubation comprennent généralement de 3 à 5 colonnes avec chacune 10 à 15 étages en recevant chacun des berceaux de 100 à 150 oeufs à couver chacun.

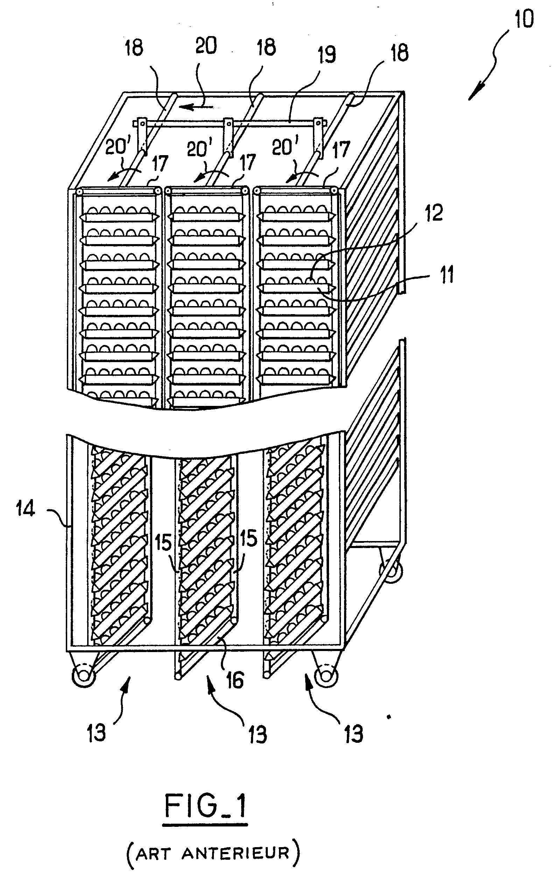

Les chariots utilisés jusqu'à présent ont la structure illustrée sur la figure 1, où l'on peut voir que le chariot 10 comprend une série de berceaux 11 recevant les oeufs 12 supperposés en une pluralité de colonnes 13 montées sur un chariot roulant 14.

Les différents berceaux d'une même colonne sont reliés ensemble à chacune de leurs extrémités par des montants 15, ces montants 15 étant eux-memes articulés en haut et en bas à des traverses inclinables 16,17, ce qui permet de donner à l'ensemble une structure de parallélogramme articulé.

Les traverses supérieures 17 sont montées sur des axes pivotants 18 reliés ensemble par une biellette 19 ; cette structure permet, par un mouvement de translation alternative (flèche 20) de la biellette 19, d'assurer un pivotement simultané (flèches 20') des axes 18, pivotement identique pour tous les axes qui a pour effet d'incliner simultanément l'ensemble des berceaux du chariot, comme cela est illustré sur la partie basse de la figure 1.

Comme on peut le constater, l'inclinaison des berceaux crée un fractionnement des différentes colonnes, avec apparition d'un couloir de vide entre les différentes colonnes.

Ce couloir de vide a pour effet de perturber la ventilation du chariot : en effet, la ventilation se fait notamment par un système de turbine à dépression qui crée un flux d'air à l'intérieur du chariot, la direction de ce flux d'air étant sensiblement parallèle aux axes 18. Lorsque les berceaux sont tous horizontaux, le flux d'air se répartit de façon sensiblement homogène sur l'ensemble de la masse d'oeufs à couver, tandis que, en position inclinée, le flux d'air a tendance à s'engouffrer dans les couloirs de vide créés entre les colonnes, diminuant ainsi le volume de la ventilation dans la masse des oeufs à couver qui opposent une plus forte perte de charge à l'endroit des colonnes.

Le système de l'art antérieur ne permet donc pas d'obtenir une ventilation homogène et constante de la masse d'oeufs au cours de la phase d'incubation.

L'un des buts de la présente invention est de remédier à cet inconvénient, en proposant une structure de chariot qui permette, en évitant le fractionnement des colonnes au cours de l'inclinaison des berceaux, de maintenir l'homogénéité de la ventilation de la masse d'oeufs à couver.

A cet effet, de façon caractéristique de la présente invention, les berceaux de deux colonnes adjacentes sont articulés sur un montant vertical commun, les différents montants étant reliés à chacune de leurs extrémités à une série de traverses inclinables reliées en série les une aux autres de manière à former un ensemble articulé à chaque point de liaison des traverses aux montants et à chaque point de liaison des montants aux berceaux, les montants adjacents pouvant être alternativement déplacés dans des sens opposés en restant parallèles à eux-mêmes de manière à réaliser un repliement et un déploiement de l'ensemble articulé produisant une inclinaison des berceaux, en sens inverse pour chacun de deux colonnes adjacentes.

De cette manière, le basculement alternatif des berceaux est réalisé sans fractionnement des colonnes et création concomitante, entre colonnes adjacentes, d'un couloir vide nuisible à une ventilation correcte de la masse des oeufs.

Selon un certain nombre de caractéristiques préférentielles :
- le mouvement alternatif de la série de montants est réalisé par un vérin à double effet dont le corps est relié à au moins un montant de rang pair (ou impair) et la tige est reliée à au moins un montant de rang impair (ou pair, respectivement) ;
- l'un des montants d'extrémité est rendu solidaire du châssis fixe du chariot ;
- le montant d'extrémité rendu solidaire du châssis fixe du chariot est le montant le plus proche du groupe de ventilation de l'enceinte d'incubation, de sorte que, lors du repliement de l'ensemble articulé, le regroupement de la masse des oeufs se fasse en direction du centre du groupe de ventilation ;
- le chariot est disposé de sorte que les plans des berceaux soient sensiblement parallèles à la direction du flux d'air de ventilation.

D'autres caractéristiques et avantages de l'invention apparaîtront à la lecture de la description détaillée d'un mode de réalisation, en référence aux dessins annexés sur lesquels :
- la figure 1, précitée, montre une structure de chariot de l'art antérieur,
- la figure 2 montre une structure de chariot conforme aux enseignements de la présente invention,
- la figure 3 est une vue schématique, en plan, d'une enceinte d'incubation dans laquelle ont été disposés une pluralité de chariots d'incubation tels que celui illustré sur la figure 2.

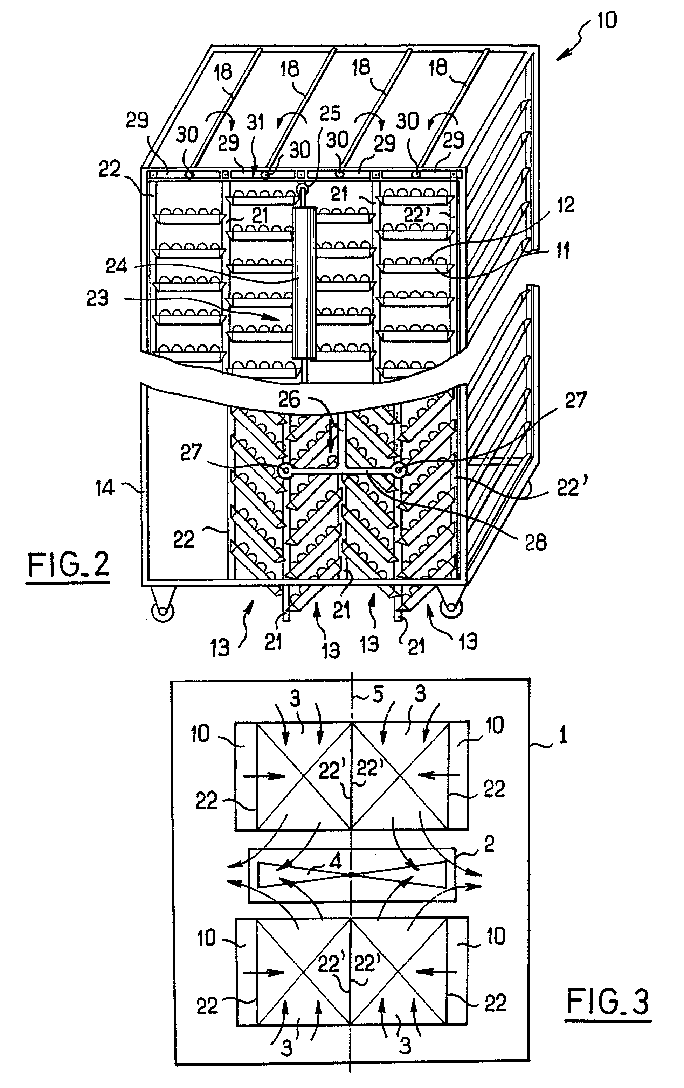

Sur la figure 2, le chariot selon la présente invention comprend, de façon en elle-meme connue, des berceaux 11 recevant les oeufs à couver 12 et disposés en une pluralité de colonnes 13 (par exemple quatre colonnes, dans le mode de réalisation illustré), l'ensemble étant installé sur un chassis roulant 14.

A la différence du chariot de l'art antérieur, les différents berceaux de deux colonnes adjacentes sont articulés sur un montant commun 21 (trois montants communs 21, dans le mode de réalisation illustré à quatre colonnes), des montants d'extrémités 22 et 22' étant également prévus pour les berceaux extrêmes.

Cette structure permet de réaliser un ensemble repliable "en accordéon", sans fractionnement de la masse d'oeufs, comme on peut le voir sur la partie inférieure de la figure 2.

Le mouvement alternatif de repliement et de déploiement de l'ensemble articulé est réalisé au moyen d'un vérin 23 dont le corps 24 est articulé (par exemple au point 25) sur un montant de rang impair (par exemple le troisième montant, qui est le montant central), tandis que la tige 26 est articulée sur les deux montants de rang pair adjacents (le second et le quatrième montants, dans le cas de figure illustré) en un point 27, par l'intermédiaire d'une biellette 28.

En partie supérieure, les montants sont reliés à des traverses 29, reliées en série les unes aux autres (à la différence du chariot de l'art antérieur de la figure 1, où ces traverses n'étaient pas reliées entre elles à leurs extrémités), chacune de ces traverses étant reliée en son centre à un axe 18 ; au point de liaison 30 de l'axe 18 à la traverse 29, la traverse 29 peut coulisser horizontalement (tout en gardant la possibilité de pivoter dans un plan vertical, sur un rail horizontal 31 solidaire du châssis 14 du chariot.

De préférence, l'un des montants d'extrémité, par exemple le montant 22', est rendu fixe et solidaire du chassis 14, tandis que l'autre montant d'extrémité (le montant 22, dans le cas illustré) reste mobile. Cette caractéristique permet d'obtenir un repliement asymétrique de l'ensemble articulé, ce repliement étant effectué en direction du montant 22', c'est à dire, comme on va l'indiquer plus bas, en direction du centre du groupe de ventilation de l'enceinte d'incubation.

La figure 3 montre schématiquement, en plan, la disposition des éléments dans l'enceinte d'incubation.

L'enceinte 1 comprend un groupe de ventilation 2, placé en position sensiblement centrale, qui crée une circulation d'air à l'intérieur de l'enceinte par effet de dépression, assurant ainsi l'homogénéisation de la température et de l'hygrométrie de la masse d'oeufs à couver 3.

Les chariots d'incubation 10, du type illustré figure 2, sont placés au nombre de quatre, avec deux chariots de chaque côté du groupe de ventilation 2 (le groupe assurant une aspiration symétrique de part et d'autre de la turbine 4, le refoulement de l'air se faisant radialement).

Les deux chariots 10 situés d'un même côté du groupe de ventilation 2 sont disposés en opposition, c'est à dire symétriquement par rapport à l'axe 5 de la turbine, de sorte que les montants 22' respectifs soient placés à proximité l'un de l'autre.

Avec cette disposition, le regroupement de la masse des oeufs à couver 3 va se faire toujours en direction de l'axe central 5 de la turbine de ventilation, le mouvement simultané des montants mobiles 22 de chaque paire de chariots se faisant alternativement en rapprochement et en éloignement relatif.

De la sorte, on peut utiliser au mieux l'effet de dépression crée par la turbine du groupe de ventilation, cet effet étant plus prononcé au voisinage de l'axe 5 qu'en direction des bords.

En outre, comme indiqué plus haut, le flux d'air crée par cette dépression (dont la direction est sensiblement parallèle à celle des axes 18) se fait de façon parfaitement homogène à l'intérieur de la masse d'oeufs, du fait de l'absence de création de couloir de vide entre les colonnes, à la différence de l'art antérieur, puisque la masse des oeufs à couver se regroupe au lieu de se diviser en colonnes séparées.

## Revendications

1. Un chariot d'incubation d'oeufs pour une enceinte d'incubation ventilée, chariot (10) dans lequel les oeufs (12) sont placés dans des berceaux (11) superposés en colonnes (13), ce chariot comprenant une pluralité de colonnes juxtaposées et les berceaux d'une même colonne étant basculables alternativement dans un sens et dans l'autre en restant parallèles entre eux,
caractérisé en ce que les berceaux de deux colonnes adjacentes sont articulés sur un montant vertical commun (21), les différents montants étant reliés à chacune de leurs extrémités à une série de traverses inclinables (29) reliées en série les une aux autres de manière à former un ensemble articulé à chaque point de liaison des traverses aux montants et à chaque point de liaison des montants aux berceaux, les montants adjacents pouvant être alternativement déplacés dans des sens opposés en restant parallèles à eux-mêmes de manière à réaliser un repliement et un déploiement de l'ensemble articulé produisant une inclinaison des berceaux, en sens inverse pour chacune de deux colonnes adjacentes,
de manière que le basculement alternatif des berceaux soit réalisé sans fractionnement des colonnes et création concomitante, entre colonnes adjacentes, d'un couloir vide nuisible à une ventilation correcte de la masse des oeufs.

2. Le chariot d'incubation d'oeufs de la revendication 1, dans lequel le mouvement alternatif de la série de montants est réalisé par un vérin à double effet (23) dont le corps (24) est relié à au moins un montant de rang pair (ou impair) et dont la tige (26) est reliée à au moins un montant de rang impair (ou pair, respectivement).

3. Le chariot d'incubation d'oeufs de la revendication 2, dans lequel l'un des montants d'extrémité (22') est rendu solidaire du châssis fixe (14) du chariot.

4. Le chariot d'incubation d'oeufs de la revendication 3, dans lequel le montant d'extrémité (22') rendu solidaire du châssis fixe du chariot est le montant le plus proche du groupe de ventilation (2) de l'enceinte d'incubation, de sorte que, lors du repliement de l'ensemble articulé, le regroupement de la masse des oeufs se fasse en direction du centre de ce groupe de ventilation.

5. Le chariot d'incubation d'oeufs de la revendication 4, dans lequel le chariot est disposé de sorte que les plans des berceaux soient sensiblement parallèles à la direction du flux d'air de ventilation.

# FIG_1

(ART ANTERIEUR)

FIG_2

FIG_3

Office européen
des brevets

**RAPPORT DE RECHERCHE EUROPEENNE**

Numero de la demande

EP    88 40 2686

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-2215664 (GEDGE) <br> --- | | A01K41/00 <br> A01K41/06 |
| A | US-A-4005679 (PAS) <br> ----- | | |

**DOMAINES TECHNIQUES RECHERCHES (Int. Cl.4)**

A01K

Le présent rapport a été établi pour toutes les revendications

| Lieu de la recherche | Date d'achèvement de la recherche | Examinateur |
|---|---|---|
| LA HAYE | 7 FEVRIER 1989 | VON ARX V.U. |

EPO FORM 1503 03.82 (P0402)